# EUROPEAN PATENT APPLICATION

(11) **EP 3 375 584 A1**
(43) Date of publication of application: **19.09.2018**
(21) Application number: 17207603.6
(22) Date of filing: 15.12.2017
(51) Int. Cl.: B28C 7/12, B28C 5/42, B65D 90/26, F16K 21/20

(54) **WATER TANK**

(30) Priority: 13.03.2017 GB 201703999
(71) Applicant: Hymix Ltd, Birmingham, West Midlands B30 3JN (GB)
(72) Inventor: HUMPISH, Nicholas James, Kings Norton Birmingham, West Midlands B30 3JN (GB)
(74) Representative: Wynne-Jones IP Limited

(57) **Abstract**

A liquid tank (100) comprising:
- a container having opposing first and second side walls, each side wall having a respective opening (104,106) therein;
- an overflow pipe (108) extending between said openings (104, 106);
- an inlet port for introducing liquid into said container, said inlet port being located at or adjacent said first side wall; and
- a flange tube (112) extending into said container from outside said second side wall such that a first end portion thereof surrounds a portion of the length of said overflow pipe (108) with a generally concentric flow path therebetween and a second end portion thereof protrudes externally of said second side wall, said flange tube (112) including a cover (114) for sealing said second end portion thereof to create a chamber, said flow path being in fluid communication with said chamber;
wherein the length of said first end portion of said flange tube (112) is selected to define the volumetric capacity of said tank.

## Description

### FIELD OF THE INVENTION

This invention relates generally to a water tank and, more specifically but not necessarily exclusively, to a water tank for use on an in-transit mixer and a method of manufacturing such a water tank.

### BACKGROUND OF THE INVENTION

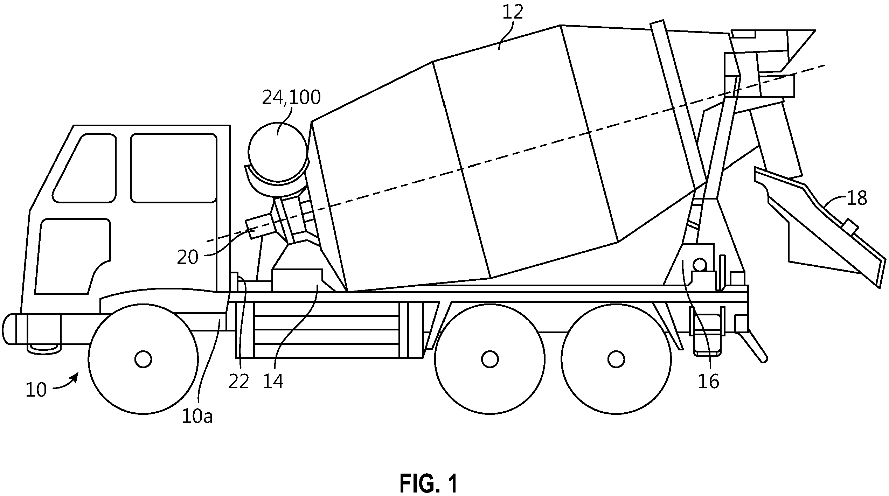

Ready-mix concrete is concrete that is manufactured in a factory or batching plant, according to a set recipe, and then delivered to a work site by a truck-mounted in-transit mixer. Referring to Figure 1 of the drawings, a typical in-transit mixer, mounted on a truck 10, comprises a drum 12 mounted between front and rear supports 14, 16 on the rear flatbed of the truck. The drum 12 has a longitudinal axis A and is mounted at an angle with its axis A around 25° - 40° relative to the horizontal axis defined by the flatbed plane. The drum 12 is closed at the lower end (toward the front of the truck and nearest the truck chassis 10a) and has an opposing open end at the rear of the truck 10, and the assembly includes, at least in many cases, a feed-in and feed-out device 18 for feeding concrete into, and discharging concrete from, the drum 12 via the open end. A hydraulic drive system 20, including a hydraulic motor and reduction gears, is provided at the closed (front) end of the drum 12 and configured, in use, to rotate the drum 12 about the axis A. The power take-off connection for the hydraulic drive system 20 is indicated generally at 22.

Whilst read-mix concrete is intended to arrive on-site in a ready-to-use state, it will be well known to a person skilled in the art that its properties may need to be adjusted at the site (or immediately prior to delivery) by adding water to the mix in the drum 12. Thus, a water tank 24 is often provided for this purpose and mounted above the closed end of the drum 12 (toward the front of the truck), with a feed (not shown) leading into the drum 12 to enable water to be selectively added to the mix in a controlled manner for final adjustment of its properties immediately prior to use on-site.

Conventionally, the water tank 24 has been manufactured from sheet steel, whereas in cases where weight is a key consideration, sheet aluminium (or aluminium composite) has been used. An advantage of working with sheet steel or aluminium in this manner is that the same machines and tools can be used to manufacture several different sizes (i.e. capacities) of tank according to customer requirements and, therefore, variations in capacity can be accommodated without requiring different production equipment or separate production runs. However, such materials have significant disadvantages associated with them. Sepcifically, steel is heavy and prone to corrosion, whereas aluminium is not only prone to corrosion, especially when using reclaimed water which can contain aggressive chemicals that attack the aluminium, but it is also harder to work with and relatively costly.

### SUMMARY OF THE INVENTION

It would be desirable to provide a lightweight, relatively low cost water tank, and method of manufacture thereof, that addresses at least some of the issues noted above.

In accordance with a first aspect of the invention, there is provided a liquid tank comprising:
- a container having opposing first and second side walls, each side wall having a respective opening therein;
- an overflow pipe extending between said openings;
- an inlet port for introducing liquid into said container, said inlet port being located at or adjacent said first side wall; and
- a flange tube extending into said container from outside said second side wall such that a first end portion thereof surrounds a portion of the length of said overflow pipe with a generally concentric flow path therebetween and a second end portion thereof protrudes externally of said second side wall, said flange tube including a cover for sealing said second end portion thereof to create a chamber, said flow path being in fluid communication with said chamber;
wherein the length of said first end portion of said flange tube is selected to define the volumetric capacity of said tank.

The container may be formed of plastics material and, in accordance with one exemplary embodiment of the invention, the container may be formed using a rotational moulding process. It will be apparent that, since the volumetric capacity of the container can be set simply by the length of the first end portion of the flange tube, a single production run can be used to form multiple containers of the same size, and the required volumetric capacity of each container can be selected according to the length of the flange tube used.

The first and second side walls may define lower and upper side walls respectively, when said tank is oriented for use, and said openings may be substantially diametrically opposite each other such that said overflow pipe extends substantially vertically therebetween. In this case, the inlet port may be located at or adjacent said lower side wall.

In an exemplary embodiment, the flange tube may be removable for alteration or replacement, as required. The cover may be removable so as to enable said flange tube to be removed if required.

In a first exemplary embodiment, the first end portion of said flange tube may be provided with at least one marker, wherein said marker is indicative of a length of said first end portion of said flange tube corresponding to a specified volumetric capacity of said tank. The first end portion of said flange tube may initially be of a first length corresponding to a smallest volumetric capacity of said tank and is provided with first and second markers along its length, each said marker being indicative of a length of said first end portion of said flange tube corresponding to specified respective larger volumetric capacities of said tank. For example, the smallest volumetric capacity may be 200 litres, and said larger volumetric capacities may be 300 litres and 500 litres respectively, but the present invention is not intended to be in any way limited in this regard.

In a second exemplary embodiment, the flange tube may be selected from a plurality of flange tubes, each having a first end portion of a different respective length corresponding to a respective volumetric capacity.

The opening in said second side wall may have a first diameter substantially equal to the outer diameter of said flange tube and the diameter of said overflow pipe may be smaller than said first diameter such that there is a concentric space between said flange tube and said overflow pipe that defines said flow path, wherein said overflow pipe may be mounted within said opening in said second side wall via a concentric flange having one or more apertures therein, said one or more apertures providing said fluid communication between said flow path and said chamber.

The flange tube may be formed of plastic.

The inlet port may be selectively operative also as an outlet port for discharging liquid from said container. The inlet port may incorporate a sump.

The tank may comprise a water tank for an in-transit mixer. In this case, the tank may further comprise mounting means configured to enable said tank to be mounted to said mixer.

The container may be generally tubular having closed opposing end walls, one of said end walls having a generally planar portion for receiving an identification plate. The identification plat may be affixed to said planar portion by means of mechanical fastening means, adhesive, or by means of an interference fit. The planar portion may be generally central on said one of said end walls with an annular circumferential portion surrounding said planar portion. Alternatively, the planar portion may cover substantially all of said one of said end walls.

The present invention extends to a method of selectively altering a volumetric capacity of the tank described above, comprising removing a first flange tube and either a) replacing said first flange tube with a second flange tube having a first end portion of a different length to that of said first flange tube; or b) cutting said first end portion of said first flange tube to a different length and subsequently replacing said first flange tube.

In accordance with a second aspect of the present invention, there is provided a method of manufacturing a liquid tank, comprising the steps of:
- forming a container having first and second opposing side walls, each side wall having an opening therein;
- providing an overflow pipe between said openings such that its longitudinal axis extends therebetween;
- providing an inlet port at or adjacent said first side wall;
- placing a flange tube through said opening in said second side wall such that a first portion of the length thereof extends into said container and surrounds a portion of the length of said overflow pipe with flow path therebetween and a second portion protrudes externally of said second side wall;
- providing a cover over the end of said second portion of said flange tube to create a chamber therebetween such that said flow path is in fluid communication with said chamber; and
- selecting a length of said first portion of said flange tube to define a volumetric capacity of said tank.
Once again, the container may be formed of plastics material. For example, the container may be formed by means of a rotational moulding process.

The method may further comprise the steps of:
- removing a first said flange tube having a second portion of a first length; and
- replacing said first flange tube with a second flange tube having a first portion of a second length, different to said first length, thereby to alter the volumetric capacity of said tank.

Alternatively, the first portion of said flange tube may be provided with at least one marker, wherein said marker is indicative of a length of said second end portion of said flange tube corresponding to a specified volumetric capacity of said tank, and the method may include the step of removing said flange tube, cutting said flange tube at said at least one marker and replacing said flange tube, thereby to alter the volumetric capacity of said tank.

### BRIEF DESCRIPTION OF THE DRAWINGS

The invention may be performed in various ways, and an embodiment thereof will now be described by way of example only, reference being made to the accompanying drawings, in which:
Figure 1 is a schematic drawing of an in-transit mixer;
Figure 2 is a schematic perspective view of a steel water tank according to the prior art;
Figure 2A is a schematic cross-sectional view of the water tank of Figure 2;
Figure 2B is a schematic end view of the water tank of Figure 2;
Figure 3 is a schematic cross-sectional view of a water ank according to an exemplary embodiment of the present invention;
Figure 4 is a schematic perspective view of an overflow pipe for the water tank of Figure 3; and
Figure 5 is a schematic perspective view of a flange tube for the water tank of Figure 3.

### DETAILED DESCRIPTION OF EMBODIMENTS

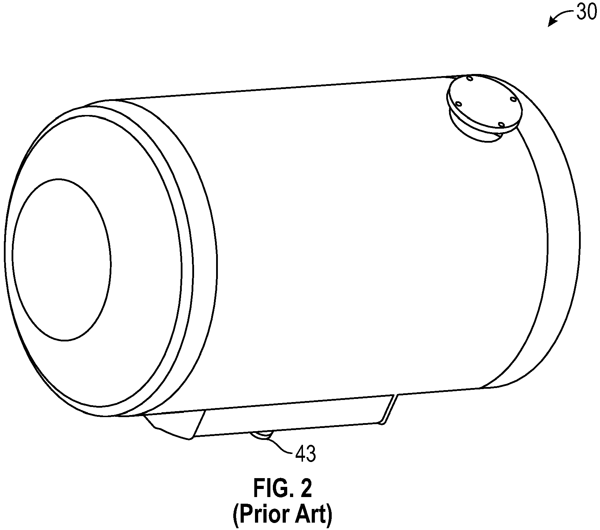

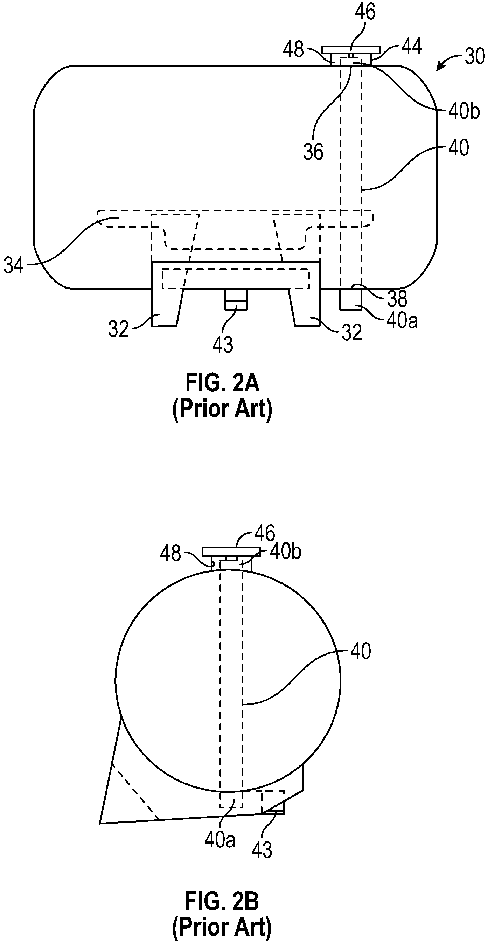

Referring to Figures 2, 2A and 2B of the drawings, there is illustrated a prior art steel water tank 30 comprising a generally tubular container defining its side walls and opposing convex end walls. A pair of legs 32 and a rear strengthener 34 are provided at the base (i.e. the 'lower' side wall when the tank is oriented for use) to enable the tank 30 to be mounted in a raised position at the closed end of the mixer drum of an in-transit mixer. The maximum capacity of the water tank is essentially defined by the inner volume of the container (i.e. the larger the container, the greater the volumetric capacity).

The container is provided with a first opening 36 in the 'upper' side wall (when the water tank is oriented for use), and a second opening 38 in the 'lower' side wall, the first and second openings being diametrically opposite each other. An overflow tube 40 extends between the first and second openings 36, 38, through the container. Referring specifically to Figures 2A and 2B of the drawings, it can be seen that a first end 40a of the overflow tube 40 extends through and beyond the second opening 38 and terminates below the base of the container. The opposing second end 40b of the overflow tube 40 extends through and beyond the first opening 36 at the upper side wall of the container. A flange tube 44, having a diameter greater than that of the first opening 36 and the overflow tube 40 is mounted on the outside of the upper side wall of the container, substantially concentrically with the first opening 36, and a cover 46, comprising a mounting flange, an overflow seal and a top cap in a stacked configuration, is fixedly mounted over the flange tube 44 to seal it. Thus, a chamber or 'envelope' 48 is provided between the cover 46 and the upper side wall of the container, surrounding the protruding second end 40b of the overflow tube 40.

An inlet/outlet tube 43 (optionally incorporating a sump) is provided at the lowest point of the container and can be used to fill the water tank with liquid. The overflow configuration comprised of the first and second openings 36, 38, the overflow tube 40, the flange tube 44 and the cover 46 is intended to avoid overfilling of the container and thus limit the possibility of water spillage onto the highway whilst the mixer truck is in transit. In use, the outlet tube 43 and the cover 46 act to seal the container. When the tank is being filled, the water level rises until it reaches the chamber 48 defined by the flange tube 44 and cover 46, which is effectively an air lock, and excess water is compelled to travel up into the chamber 48 and to the top of the overflow pipe 40 (at the second end 40b), whereupon it escapes the container.

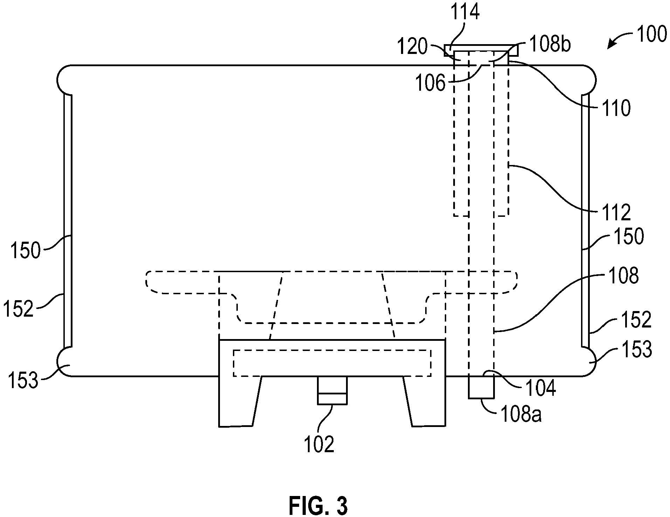

Referring now to Figure 3 of the drawings, a water tank according to an exemplary embodiment of the present invention comprises a water tank 100 formed of plastic by means of a rotational moulding manufacturing process, which is a known process for making hollow articles. In general, a plastic material, normally in powder form is placed into a hollow mould. The mould is closed and rotated slowly on two axes. The mould is then heated in an oven, whilst rotating, and the polymer gradually melts and 'lays up' on the inside of the mould. Once the polymer powder has fully melted, the mould is moved to a cooling station and cooled, usually with air and sometimes a fine mist of water. As the mould cools, the part solidifies and, when the material has finally cooled sufficiently to release away from the mould surface, the process is stopped and the product is taken out of the mould.

Other processes for manufacturing a hollow plastic container are, of course, known, and at least some aspects of the present invention are not necessarily intended to be limited in this regard. Many, if not all, such known processes require the use of a mould. An advantage of rotational moulding is that, because no pressure is involved, the moulds for the process are relatively inexpensive (as they do not have to withstand pressure) and therefore relatively short production runs can be made very economically. Nevertheless, it is not economical to provide several different moulds and several respective production runs to provide for the plurality of different water tank capacities employed in the art. Typically, 500L, 300L and 200L capacity tanks are utilised, although it is to be understood that the present invention is not necessarily intended to be limited in this regard.

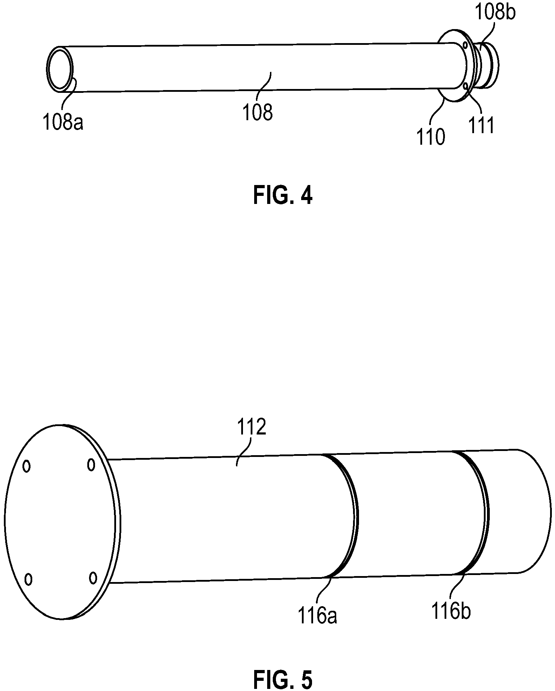

Referring back to Figure 3 of the drawings, the tank 100 comprises a single inlet/outlet pipe 102 at its lowest end, incorporating a sump (not shown). Once again, a pair of diametrically opposite openings 104, 106 is provided in the side walls of the tank, with an overflow pipe 108 therebetween. One end 108a of the overflow pipe 108 extends beyond and below the first opening 104 and the opposing second end 108b of the overflow pipe 108 extends through and beyond the second opening 106. The second opening 106 has a diameter greater than that of the overflow pipe 108 and, referring additionally to Figure 4 of the drawings, the overflow pipe 108 is provided with a concentric outer flange 110 located at its upper end (when oriented for use). The outer flange 110 has a plurality of apertures 111 therein. When the overflow pipe 108 is located as described above between the two openings 104, 106, the outer flange 110 sits within the second opening 106.

In this case, there is a flange tube 112 which is much longer than in prior art arrangements and which may be formed of plastic (or other material that can be relatively easily sawn or cut). The flange tube 112 sits within the second opening 106, surrounding the outer flange 110 and abutted (sealed) against the edge of the opening 106, such that a substantial portion of its length extends into the tank: in this case, up to about two thirds of the way down along the length of the overflow pipe 108. The flange tube 112 is provided with a cover 114, which may again comprise a mounting flange, overflow seal and top cap in a stacked configuration, but in this case the cover is removably mounted over the top of the flange tube 112, to enable the flange tube to be removed if required for replacement and/or alteration.

The length of the flange tube 112, i.e. the extent to which it extends into the tank, determines the volumetric capacity of the tank. Thus, referring to Figure 5 of the drawings, in the illustrated example, the full length of the flange tube 112, which may be 55-65% of the length of the overflow pipe 108, my be used to provide a smallest volumetric capacity (e.g. 200L), and cut marks 116a, 116b may be provided at appropriate locations on the outer surface of the flange tube 112 to indicate where the tube may be cut (i.e. shortened) to provide second and third volumetric capacities (e.g. 300L and 500L) respectively. As a result, the present invention provides a water tank, and method of manufacturing such a water tank, wherein the volumetric capacity of a single tank can be varied as required, simply by selecting the length of the flange tube 112.

In use, when filling the tank (via inlet/outlet pipe 102), the water level rises until it hits the bottom of the flange tube 112, at which point the volume in the tank will be 'air locked', and any excess water will be compelled to travel up the inside of the flange tube 112, through the apertures 111 in the outer flange 110 and to the top of the overflow pipe 108 inside the chamber 120 defined between the cover 114 and the upper end of the flange tube 112 (the portion above the outer wall of the tank), whereupon it will escape the tank via the overflow pipe 108. Thus, the longer the flange tube 112, the smaller will be the effective volumetric capacity of the tank.

Thus it can be seen that the present invention provides a liquid (e.g. water tank) wherein its volumetric capacity can be altered simply by altering the portion of the length of the flange tube that surrounds the overflow pipe within the container, rather than changing the size of the container itself. As a result, a single production run can be utilised to manufacture the container, making it economical to use a plastics moulding process such as rotational moulding to form the container, and the volumetric capacity of the tank can then be selected by selecting the length of the flange tube. In the exemplary embodiment described above, this selection can be done by sawing or cutting the flange tube at one of the markers to provide an increased volumetric capacity if required, but in other exemplary embodiments, the flange tube can simply be provided and fitted at the required length. It is even envisaged that the assembly can be provided as a kit of parts including interchangeable flange tubes of different lengths such that the volumetric capacity of the tank can be altered as required, simply by replacing the flange tube.

Referring back to Figure 3 of the drawings, it can be seen that both of the end walls of the container have a generally planar central portion 150. In exemplary embodiments of the invention, a disc or plate may be mounted on the planar portion of each end wall, to facilitate livery compliance. (Alternatively, of course, and depending on the orientation of the water tank in use, only one of the end walls may be configured to receive a disc or plate). This is advantageous compared with attempting to provide an appropriately coloured container, or indeed, spraying or otherwise painting a plastic container, which has inherent disadvantages, as will be known to a person skilled in the art. Thus, instead, it is proposed to provide a disc or plate 152 of a material that readily lends itself to livery compliance through conventional spraying, powder coating, gel coating or other means, and mounting that disc or plate over an end wall of the container by, for example, mechanical fasteners, glue or adhesive, or an interference fit. In the example illustrated, the disc or plate 152 covers only a portion of the end wall of the container, leaving a distinct annulus 153 of the plastic container. However, in other exemplary embodiments, the disc or plate may be mounted over the entire end wall, and may even extend a little beyond the side edges of the end wall, as desired, and the present invention is not necessarily intended to be limited in this regard.

It will be appreciated by a person skilled in the art, from the foregoing description, that modifications and variations can be made to the described embodiments, without departing from the scope of the invention as defined by the appended claims.

## Claims

1. A liquid tank comprising:
- a container having opposing first and second side walls, each side wall having a respective opening therein;
- an overflow pipe extending between said openings;
- an inlet port for introducing liquid into said container, said inlet port being located at or adjacent said first side wall; and
- a flange tube extending into said container from outside said second side wall such that a first end portion thereof surrounds a portion of the length of said overflow pipe with a generally concentric flow path therebetween and a second end portion thereof protrudes externally of said second side wall, said flange tube including a cover for sealing said second end portion thereof to create a chamber, said flow path being in fluid communication with said chamber;
wherein the length of said first end portion of said flange tube is selected to define the volumetric capacity of said tank.

2. A tank according to claim 1, wherein said container is formed of plastics material, and optionally wherein said container is formed using a rotational moulding process.

3. A tank according to any of the preceding claims, wherein said first and second side walls define lower and upper side walls respectively, when said tank is oriented for use, and said openings are substantially diametrically opposite each other such that said overflow pipe extends substantially vertically therebetween, and optionally wherein said inlet port is located at or adjacent said lower side wall.

4. A tank according to any of the preceding claims, wherein said flange tube is removable for alteration or replacement, as required, and optionally wherein said cover is removable so as to enable said flange tube to be removed if required.

5. A tank according to any of the preceding claims, wherein said first end portion of said flange tube is provided with at least one marker, wherein said marker is indicative of a length of said first end portion of said flange tube corresponding to a specified volumetric capacity of said tank, and optionally wherein said first end portion of said flange tube is initially of a first length corresponding to a smallest volumetric capacity of said tank and is provided with first and second markers along its length, each said marker being indicative of a length of said first end portion of said flange tube corresponding to specified respective larger volumetric capacities of said tank, and optionally wherein said smallest volumetric capacity is 200 litres, and said larger volumetric capacities are 300 litres and 500 litres respectively.

6. A tank according to claim 5 wherein the flange tube is selected from a plurality of flange tubes, each having a first end portion of a different respective length corresponding to a respective volumetric capacity.

7. A tank according to any of the preceding claims, wherein said opening in said second side wall has a first diameter substantially equal to the outer diameter of said flange tube and the diameter of said overflow pipe is smaller than said first diameter such that there is a concentric space between said flange tube and said overflow pipe that defines said flow path, wherein said overflow pipe is mounted within said opening in said second side wall via a concentric flange having one or more apertures therein, said one or more apertures providing said fluid communication between said flow path and said chamber.

8. A tank according to any of the preceding claims, wherein said flange tube is formed of plastic; and/or wherein said inlet port is selectively operative also as an outlet port for discharging liquid from said container.

9. A tank according to any of the preceding claims, wherein said inlet port incorporates a sump; and/or comprising a water tank for an in-transit mixer, and optionally further comprising mounting means configured to enable said tank to be mounted to said mixer.

10. A tank according to any of the preceding claims, wherein said container is generally tubular having closed opposing end walls, one of said end walls having a generally planar portion for receiving an identification plate; and/or wherein said identification plat is affixed to said planar portion by means of mechanical fastening means, adhesive, or by means of an interference fit, and optionally wherein said planar portion is generally central on said one of said end walls with an annular circumferential portion surrounding said planar portion.

11. A tank according to claim 10, wherein said planar portion covers substantially all of said one of said end walls.

12. A method of manufacturing a liquid tank, comprising the steps of:
- forming a container having first and second opposing side walls, each side wall having an opening therein;
- providing an overflow pipe between said openings such that its longitudinal axis extends therebetween;
- providing an inlet port at or adjacent said first side wall;
- placing a flange tube through said opening in said second side wall such that a first portion of the length thereof extends into said container and surrounds a portion of the length of said overflow pipe with flow path therebetween and a second portion protrudes externally of said second side wall;
- providing a cover over the end of said second portion of said flange tube to create a chamber therebetween such that said flow path is in fluid communication with said chamber; and
- selecting a length of said first portion of said flange tube to define a volumetric capacity of said tank.

13. A method according to claim 12, wherein said container is formed of plastics material, and optionally wherein said container is formed by means of a rotational moulding process.

14. A method according to claim 13, comprising the steps of:
- removing a first said flange tube having a second portion of a first length; and
- replacing said first flange tube with a second flange tube having a first portion of a second length, different to said first length, thereby to alter the volumetric capacity of said tank.

15. A method according to claim 13 or claim 14, wherein said first portion of said flange tube is provided with at least one marker, wherein said marker is indicative of a length of said second end portion of said flange tube corresponding to a specified volumetric capacity of said tank, and the method includes the step of removing said flange tube, cutting said flange tube at said at least one marker and replacing said flange tube, thereby to alter the volumetric capacity of said tank.

16. An in-transit mixer, having mounted thereon a water tank according to any of claims 1 to 11.
